# EUROPEAN PATENT APPLICATION

(11) **EP 1 942 253 A2**
(43) Date of publication of application: **09.07.2008**
(21) Application number: 07123647.5
(22) Date of filing: 19.12.2007
(51) Int. Cl.: F01D 9/04, F02K 3/06, F04D 29/54

(54) **Guide vane and method of fabricating the same**

(30) Priority: 29.12.2006 US 648508; 13.03.2007 US 685299
(71) Applicant: General Electric Company, Schenectady, NY 12345 (US)
(72) Inventor: Moniz, Thomas Ory, Loveland, OH 45140 (US); Orlando, Robert Joseph, West Chester, OH 45069 (US); Macsotai, Noel Istvan, Loveland, OH 45140 (US); Cedar, Richard D., Cincinnati, OH 45242 (US)
(74) Representative: Illingworth-Law, William Illingworth

(57) **Abstract**

A method for fabricating an outlet guide vane (70) includes the steps of fabricating a structural spar (72) from a first material, fabricating a fairing (74) from a second material, and installing the fairing (74) onto the spar (72) so as to at least partially surround the spar (72) and form an airfoil (102). An outlet guide vane (70) includes an airfoil (102) including a leading edge (114) and a trailing edge (116), a structural spar (72) formed from a first material located within the airfoil (102), and a fairing (74) formed from a second material at least partially surrounding the spar (72). A gas turbine engine assembly (10) includes a core gas turbine engine (13), a fan assembly (12) including a plurality of fan blades (24) coupled to the core gas turbine engine (13), and a plurality of outlet guide vanes (70) coupled downstream from the fan blades (24), at least one of the outlet guide vanes (70) including an airfoil (102) having a leading edge (114) and a trailing edge (116), a structural spar (72) formed from a first material located within the airfoil (102), and a fairing (74) formed from a second material at least partially surrounding the spar (72).

## Description

### BACKGROUND OF THE INVENTION

The technology described herein relates generally to gas turbine engines, and more particularly, to a gas turbine engine guide vane and a method of fabricating the same.

At least one known gas turbine engine assembly includes a fan assembly that is mounted upstream from a core gas turbine engine. During operation, a portion of the airflow discharged from the fan assembly is channeled downstream to the core gas turbine engine wherein the airflow is further compressed. The compressed airflow is then channeled into a combustor, mixed with fuel, and ignited to generate hot combustion gases. The combustion gases are then channeled to a turbine, which extracts energy from the combustion gases for powering the compressor, as well as producing useful work to propel an aircraft in flight. The other portion of the airflow discharged from the fan assembly exits the engine through a fan stream nozzle.

To facilitate channeling the airflow from the fan assembly to the core gas turbine engine, at least one known gas turbine engine assembly includes an outlet guide vane assembly that is used to remove swirl before the fan nozzle. Such an outlet guide vane assembly is configured to turn the airflow discharged from the fan assembly to a substantially axial direction prior to the fan flow being channeled through the bypass duct. In addition to turning the fan airflow, the outlet guide vane assembly also provides structural stiffness to the fan frame. More specifically, outlet guide vane assemblies generally include a plurality of outlet guide vanes that are coupled to the fan frame. To provide the necessary structural stiffness to the fan frame, the known outlet guide vanes are forged as substantially solid vanes using a metallic material.

However, because the known outlet guide vanes are substantially solid, they increase the overall weight of the gas turbine engine assembly, and may also cause a reduction in fuel efficiency.

### BRIEF SUMMARY OF THE INVENTION

In one aspect, a method for fabricating an outlet guide vane includes the steps of fabricating a structural spar from a first material, fabricating a fairing from a second material, and installing the fairing onto the spar so as to at least partially surround the spar and form an airfoil.

In another aspect, an outlet guide vane includes an airfoil including a leading edge and a trailing edge, a structural spar formed from a first material located within the airfoil, and a fairing formed from a second material at least partially surrounding the spar.

In a further aspect, a gas turbine engine assembly includes a core gas turbine engine, a fan assembly including a plurality of fan blades coupled to the core gas turbine engine, and a plurality of outlet guide vanes coupled downstream from the fan blades, at least one of the outlet guide vanes including an airfoil having a leading edge and a trailing edge, a structural spar formed from a first material located within the airfoil, and a fairing formed from a second material at least partially surrounding the spar.

### BRIEF DESCRIPTION OF THE DRAWINGS

Embodiments of the present invention will now be described, by way of example only, with reference to the accompanying drawings, in which:

Figure 1 is a cross-sectional illustration of an exemplary gas turbine engine assembly;

Figure 2 is an elevational view of an outlet guide vane that may be utilized with the gas turbine engine assembly shown in Figure 1;

Figure 3 is a cross-sectional view of the outlet guide vane of Figure 2 taken along line 3-3; and

Figure 4 is cross-sectional view similar to Figure 3 of an alternative embodiment of the outlet guide vane shown in Figure 2.

### DETAILED DESCRIPTION OF THE INVENTION

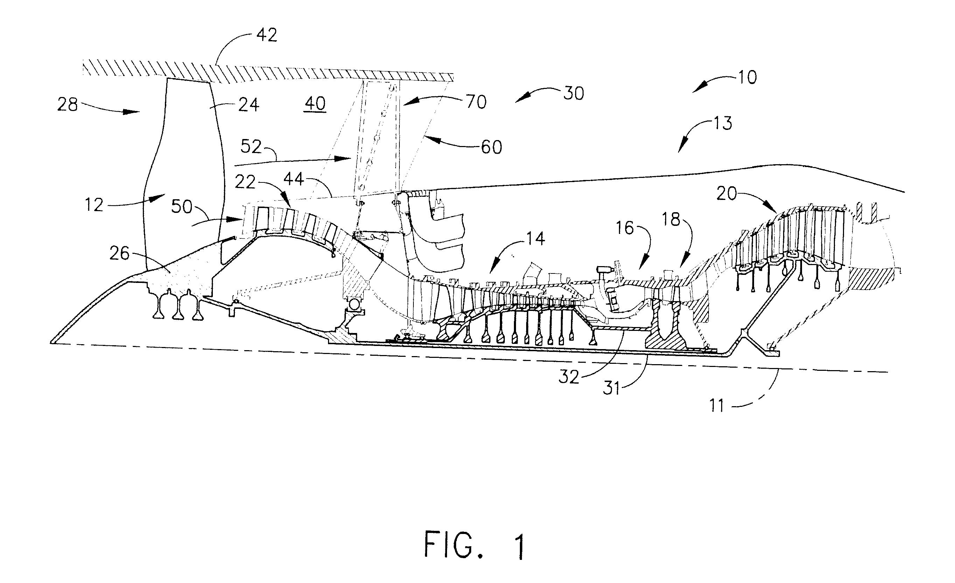

Figure 1 is a cross-sectional schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 22, and a splitter 44 that substantially circumscribes booster 22.

Fan assembly 12 includes an array of fan blades 24 extending radially outward from a rotor disk 26. Gas turbine engine assembly 10 has an intake side 28 and an exhaust side 30. Fan assembly 12, booster 22, and turbine 20 are coupled together by a first rotor shaft 31, and compressor 14 and turbine 18 are coupled together by a second rotor shaft 32.

In operation, air flows through fan assembly 12 and a first portion 50 of the airflow is channeled through booster 22. The compressed air that is discharged from booster 22 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions.

A second portion 52 of the airflow discharged from fan assembly 12 is channeled through a bypass duct 40 to bypass a portion of the airflow from fan assembly 12 around core gas turbine engine 13. More specifically, bypass duct 40 extends between a fan casing or shroud 42 and splitter 44. Accordingly, a first portion 50 of the airflow from fan assembly 12 is channeled through booster 22 and then into compressor 14 as described above, and a second portion 52 of the airflow from fan assembly 12 is channeled through bypass duct 40 to provide thrust for an aircraft, for example. Gas turbine engine assembly 10 also includes a fan frame assembly 60 to provide structural support for fan assembly 12 and is also utilized to couple fan assembly 12 to core gas turbine engine 13.

Fan frame assembly 60 includes a plurality of outlet guide vanes 70 that extend substantially radially between a radially outer mounting flange and a radially inner mounting flange and are circumferentially-spaced within bypass duct 40. Fan frame assembly 60 may also include a plurality of struts that are coupled between a radially outer mounting flange and a radially inner mounting flange. In one embodiment, fan frame assembly 60 is fabricated in arcuate segments in which flanges are coupled to outlet guide vanes 70 and struts. In one embodiment, outlet guide vanes and struts are coupled coaxially within bypass duct 40. Optionally, outlet guide vanes 70 may be coupled downstream from struts within bypass duct 40.

Fan frame assembly 60 is one of various frame and support assemblies of gas turbine engine assembly 10 that are used to facilitate maintaining an orientation of various components within gas turbine engine assembly 10. More specifically, such frame and support assemblies interconnect stationary components and provide rotor bearing supports. Fan frame assembly 60 is coupled downstream from fan assembly 12 within bypass duct 40 such that outlet guide vanes 70 and struts are circumferentially-spaced around the outlet of fan assembly 12 and extend across the airflow path discharged from fan assembly 12.

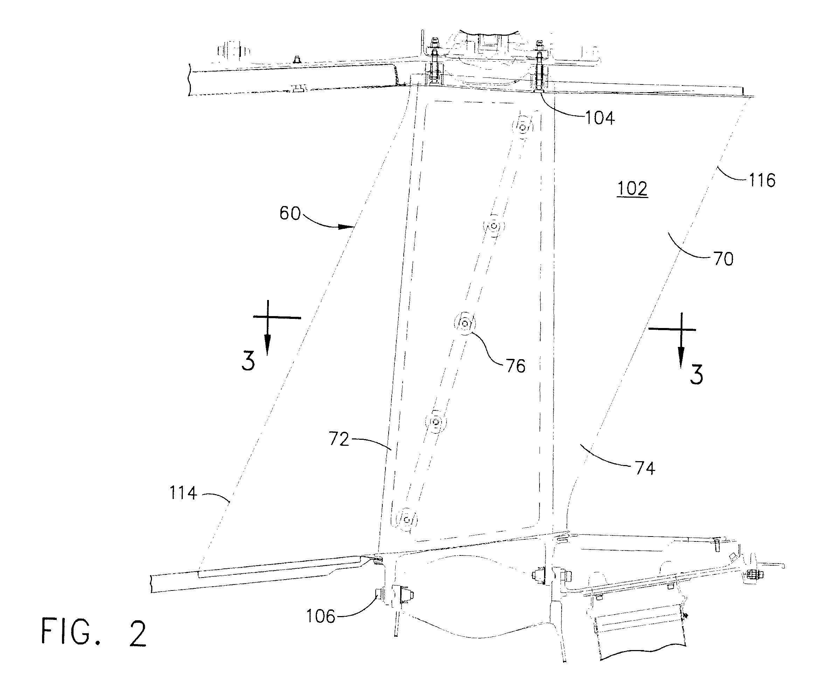

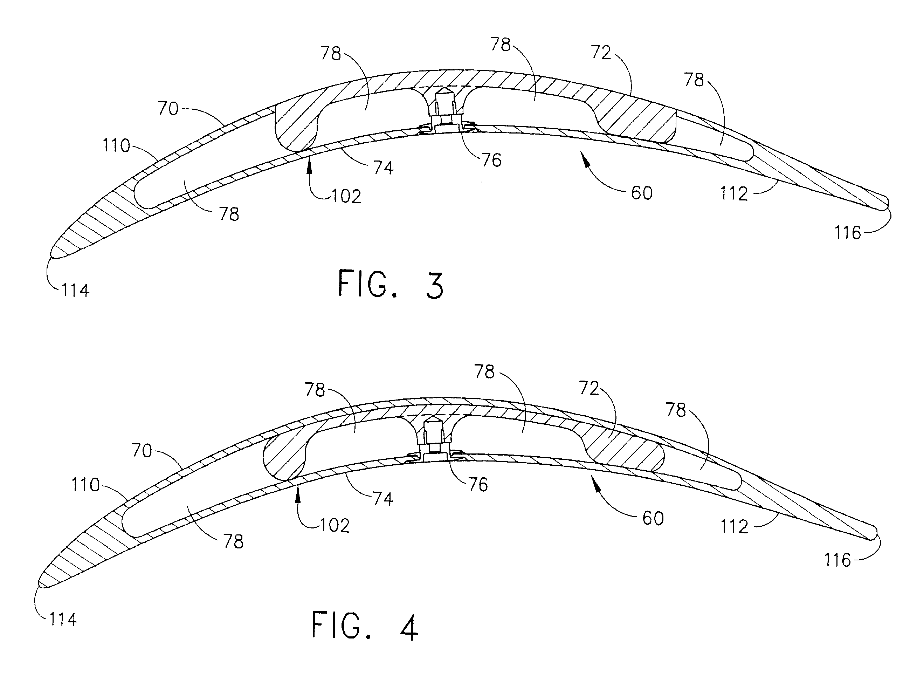

Figure 2 is an elevational view of an outlet guide vane 70 that may be used with fan frame 60 shown in Figure 1. Figure 3 is a cross-sectional view of outlet guide vane 70 shown in Figure 2. Figure 4 is a cross-sectional view of another exemplary outlet guide vane 70. In the exemplary embodiment, outlet guide vane 70 includes an airfoil 102 that is coupled between a radially outer flange and a radially inner flange. Airfoil 102, radially outer flange 104, and a radially inner flange 106 may be cast or forged as a unitary outlet guide vane 70. Optionally, radially outer flange 104 and a radially inner flange 106 may be coupled to airfoil 102 using a welding or brazing technique, for example.

As shown in Figures 3 and 4, Airfoil 102 includes a first sidewall 110 and a second sidewall 112. In one embodiment, either first and/or second sidewalls 110 and/or 112 may be contoured to improve aerodynamic performance. In the exemplary embodiment, first sidewall 110 is convex and defines a suction side of airfoil 102, and second sidewall 112 is concave and defines a pressure side of airfoil 102. Sidewalls 110 and 112 are joined at a leading edge 114 and at an axially-spaced trailing edge 116 of airfoil 102. More specifically, airfoil trailing edge 116 is spaced chordwise and downstream from airfoil leading edge 114. First and second sidewalls 110 and 112, respectively, extend longitudinally or radially outward in span from radially inner flange 106 to radially outer flange 104. In the exemplary embodiment, at least a portion of outlet guide vane 70 is fabricated utilizing a metallic material such as, but not limited to, titanium, aluminum, and/or a Metal Matrix Composite (MMC) material.

As shown in Figures 3 and 4, airfoil 102 is a two-piece construction, which includes a structural spar 72, fabricated utilizing a metallic material such as titanium, forged aluminum, and/or a Metal Matrix Composite (MMC) material, for example. Airfoil 102 also includes a fairing 74, which may be axially swept and/or circumferentially leaning, which is attached to structural spar 72 using fasteners such as bolts 76 or via other suitable fastening techniques known in the art such as adhesive bonding, rivets, etc. More specifically, airfoil 102 has a profile that tapers outwardly from leading edge 114 at least partially towards trailing edge 116 and also tapers outwardly from trailing edge 116 at least partially towards leading edge 114. Pockets 78 may be defined between fairing 74 and spar 72. The embodiments of Figures 3 and 4 differ in that the fairing 74 partially surrounds spar 72 in Figure 3, such that spar 72 forms a portion of the aerodynamic surface of airfoil 102, while in Figure 4 the fairing 74 fully surrounds the spar 72 to form a complete aerodynamic surface. Spar 72 is positioned approximately centrally between leading edge portion and trailing edge portion of outlet guide vane 70.

Pockets 78 further reduce the overall weight of outlet guide vane 70. In the exemplary embodiment, pockets 78 may receive a respective filler therein that is a relatively lightweight material. Lightweight material as used herein, is defined as a material that is different than the material utilized to fabricate spar 72 and fairing 74, which are fabricated utilizing a material that has a per volume weight that is greater than the per volume weight of the filler material. In the exemplary embodiment, filler may be fabricated from a Styrofoam, for example. As such, each pocket has a depth and each respective filler has a thickness that is substantially equal to the pocket depth such that when each respective fillers are positioned within pockets 78, airfoil 102 has an aerodynamic profile that is substantially smooth from the airfoil leading edge 114 to the airfoil trailing edge 116. In one embodiment, fillers are fabricated as separate components and installed within pockets 78. Optionally, fillers are sprayed or injected into pockets 78 and machined if necessary to form a relatively smooth or aerodynamic outer surface to which a covering material is attached, as discussed below. Pockets 78 may have acoustic treatments or other materials therein in addition to or in lieu of filler materials. Pockets 78 may also be left void if desired to minimize the weight of the airfoil 102.

To fabricate outlet guide vane 70, the structural spar 72 may be cast or forged. The fillers are then injected or coupled within the pockets 78 as described above. A covering material is then wrapped around the outer periphery of airfoil 102 to form fairing 74, which is then secured to spar 72 with fasteners, or otherwise secured in place. Alternatively, fairing 74 may be secured onto spar 72 and any filler material then injected or placed inside pockets 78 if desired. Covering material may be wrapped at a forty-five degree angle completely around airfoil 102 in successive rows or layers. Moreover, the fairing facilitates increasing the overall structural integrity of outlet guide vane 70 and forms a relatively smooth outer surface to improve aerodynamic performance.

In the exemplary embodiment, fairing 74 is a composite material. In the exemplary embodiment, the fairing 74 may be a fiberglass material, a graphite material, a carbon material, a ceramic material, an aromatic polyamid material such as KEVLAR, a thin metallic material, and/or mixtures thereof. Any suitable thermosetting polymeric resin can be used in forming covering material for fairing 74, for example, vinyl ester resin, polyester resins, acrylic resins, epoxy resins, polyurethane resins, bismalimide resin, and mixtures thereof. Overall, the covering material is selected such that an exterior surface of outlet guide vane is resistant to wear and or damage that may be caused by foreign objects ingested into gas turbine engine assembly 10. Alternate fairing configurations may use a thin metal wrap over a composite fairing to protect against such wear or damage. Fairing 74 may be bolted or otherwise fastened to spar 72 along their length and then slotted or bonded into acoustic panels at its leading edge.

As shown in Figures 1 and 2, irrespective of whether spar 72 is essentially radial or includes any sweep or circumferential lean, fairing 74 may provide a swept and/or inclined aerodynamic surface. This may provide aerodynamic, acoustic, or other benefits in terms of gas turbine engine performance. Angles of sweep such as +/- 0-40 degrees and/or circumferentially leaning outlet guide vane 70 +/- 0-30 degrees from the radial orientation may provide acoustic benefits, such as reductions in noise from the fan assembly 12.

Described herein is a gas turbine engine wherein at least some known outlet guide vanes are replaced with an outlet guide vane having a substantially hollow interior portion filled with a relatively lightweight material and then wrapped with a composite material to form a lightweight outlet guide vane. As such, the exemplary outlet guide vanes described herein reduce the overall weight of the gas turbine engine assembly while still maintaining structural integrity thus achieving the very challenging engine weight goals for new applications. The method of fabricating the outlet guide vanes includes fabricating an airfoil that includes a structural spar fabricated from a first material, a fairing fabricated from a second material and at least partially surrounding the spar, and installing a filler portion between the leading and trailing edge portions, the filler portion is fabricated from a third material that is lighter than the first and second materials.

More specifically, the outlet guide vanes described herein includes a spar and a fairing that form the airfoil portion of the outlet guide vane. The areas between the spar and fairing may be filled with a lightweight material such as Styrofoam to add rigidity to the airfoil. In one embodiment, the airfoil includes a spar which is at least partially hollow and which provides radial and axial overturning stiffness as well as protects against any aero-mechanical vibrations.

In one embodiment, the spars are substantially solid. Optionally, a portion of the interior of each spar may be removed to create an at least partially hollow spar and further reduce the overall weight of the outlet guide vane (as shown in Figures 2-4). The outlet guide vane is then covered utilizing a thin metallic material or a composite material to protect the outlet guide vane from solid particle damage. In one embodiment, the spars are fabricated using a metallic material. Optionally, the spars may be fabricated utilizing a composite material that includes a plurality of fibers woven directionally radial to the gas turbine engine axis 11.

As a result, the outlet guide vanes described herein substantially reduce the overall weight of the gas turbine engine assembly. For example, the outlet guide vanes described herein are 30% to 50% lighter than known outlet guide vanes. Additionally, because the outlet guide vanes described herein include a structural element as well as an airfoil to provide for turning of the airflow, a reduction in the number of outlet guide vanes of about 50% may be achieved versus conventional designs. The reduced outlet guide vane count, in conjunction with the axial sweep and circumferential leaning results an acoustic noise benefit due to reduced fan blade wake interaction. To maintain aerodynamic loading with reduced outlet guide vane count requires an increase in chord and maximum thickness. This increase in the chord and outlet guide vane maximum thickness allows for more internal volume, which can be filled with lightweight materials. Similarly, spar leading and trailing edge thickness can be adjusted to obtain frame stiffness requirements and maintaining a minimum spar axial width.

Alternatively, the engine fan assembly 12 can be redesigned to use the outlet guide vanes described herein. The resulting engine would have a smaller fan and outlet guide vane diameter and further weight reductions versus the design previously described, but no acoustic noise benefits.

While the invention has been described in terms of various specific embodiments, those skilled in the art will recognize that the invention can be practiced with modification within the spirit and scope of the claims.

## Claims

1. A method for fabricating a gas turbine engine outlet guide vane (70), comprising:
fabricating a structural spar (72) from a first material;
fabricating a fairing (74) from a second material; and
installing said fairing (74) onto said spar (72) so as to at least partially surround said spar (72) and form an airfoil (102).

2. A method in accordance with Claim 1, further comprising:
installing a filler material between the structural spar (72) and the fairing (74), the filler material being fabricated from a third material that is lighter than the first and second materials.

3. A method in accordance with Claim 1 or Claim 2, further comprising:
securing said fairing (74) onto said spar (72) with fasteners.

4. A method in accordance with any one of the preceding Claims, further comprising forming a plurality of openings through said spar (72) to reduce the weight of the airfoil (102).

5. An outlet guide vane (70) for a gas turbine engine (10), said outlet guide vane (70) comprising:
an airfoil (102) having a leading edge (114) and a trailing edge (116);
a structural spar (72) formed from a first material located within said airfoil (102); and
a fairing (74) formed from a second material at least partially surrounding said spar (72).

6. An outlet guide vane (70) in accordance with Claim 5, further comprising a filler material formed from a third material positioned between said spar (72) and said fairing (74).

7. A gas turbine engine assembly (10), comprising:
a core gas turbine engine (13);
a fan assembly (12) disposed upstream from said core gas turbine engine (13), said fan assembly (12) comprising a plurality of fan blades (24); and
a plurality of outlet guide vanes (70) disposed downstream from said fan blades (24), at least one of said outlet guide vanes (70) comprising
an airfoil (102) having a leading edge (114) and a trailing edge (116);
a structural spar (72) formed from a first material located within said airfoil (102); and
a fairing (74) formed from a second material at least partially surrounding said spar (72).

8. A gas turbine engine assembly (10) in accordance with Claim 7, said outlet guide vanes (70) further comprising a filler material formed from a third material positioned between said spar (72) and said fairing (74).

9. A gas turbine engine assembly (10) in accordance with Claim 7 or Claim 8, wherein said plurality of outlet guide vanes (70) include an angle of sweep.

10. A gas turbine engine assembly (10) in accordance with any one of Claims 7 to 9, wherein said plurality of outlet guide vanes (70) include an angle of circumferential lean from the radial orientation.
